# NEUE EUROPÄISCHE PATENTSCHRIFT

(11) **EP 1 046 460 B2**
(45) Veröffentlichungstag und Bekanntmachung des Hinweises auf die Entscheidung über den Einspruch: **28.10.2009**
(45) Hinweis auf die Patenterteilung: 29.01.2003
(21) Anmeldenummer: 00107030.9
(22) Anmeldetag: 31.03.2000
(51) Int. Cl.: B23Q 11/08

(54) **Werkzeugmaschine mit einer Arbeitsraumabdeckung**
Machine tool with workspace protection
Machine-outil avec protection d'espace de travail

(30) Priorität: 22.04.1999 DE 19918359
(43) Veröffentlichungstag der Anmeldung: 25.10.2000
(73) Patentinhaber: DECKEL MAHO GmbH, D-87459 Pfronten (DE)
(72) Erfinder: Hoppe, Gerd, 34317 Habichtswald (DE); Seitz, Reinhold, 87659 Hopferau (DE); Hartmann, Horst, 70839 Gerlingen (DE)
(74) Vertreter: Beetz & Partner

(56) Entgegenhaltungen:
- EP-A- 0 331 178
- EP-A- 0 551 186
- DE-A- 19 736 252
- US-A- 5 342 156

## Beschreibung

Die Erfindung betrifft eine Univesal-Fräs- und Bohrmaschine mit einer Arbeitsraumabdeckung der im Oberbegriff des Patentanspruchs 1 angegebenen Gattung.

Bei herkömmlichen Werkzeugmaschinen mit einer meist als Schutzkabine bezeichneten Arbeitsraumabdeckung sind Türen in der Regel als geradlinig verschiebbare Flachtüren ausgebildet. Um einen ausreichend großen Zugang zum Arbeitsraum der Werkzeugmaschine zu ermöglichen, sind häufig zwei über Eck angeordnete und getrennt zu betätigende Schiebetüren vorgesehen, die in ihrer Offenstellung ein beträchtliches Stück über den Maschinenständer seitlich vorstehen und dadurch zur Behinderung führen können. Darüber hinaus treten Dichtprobleme im Bereich der Stoßkanten der beiden Schiebetüren in ihrer Schließstellung auf und es müssen besondere Vorkehrungen getroffen werden, um ein Abtropfen des Kühlmittels von den in der Offenstellung seitlich vorstehenden Türen zu vermeiden. Außerdem sind bei derartigen Schiebetüren relativ aufwendige Schiebeführungen sowohl an der Unterseite als auch an der Oberseite erforderlich.

Aus der EP 0 331 178 A1 ist eine kompakte Säulenbohrmaschine bekannt, deren Maschinenkopf zusammen mit dem vertikal verschiebbaren Bohrer in horizontaler Richtung verstellt oder verschwenkt werden kann. Die Maschine selbst inkl. eines Werkzeugmagazins mit Wechsler ist von einer Rundkabine umgeben, die aus zwei zylindrischen Halbschalen mit Sichtfenstern besteht. Beide Halbschalen sind in- bzw. gegeneinander beweglich geführt, so daß durch eine Verschiebung der einen oder anderen Halbschale jeder Maschinenbereich von außen zugänglich ist. Für größere Werkzeugmaschinen mit längeren Fahrwegen in den horizontalen Koordinatenachsen ist eine derartige Rundkabine jedoch nicht geeignet, da die bewegbaren Halbschalen entsprechend größere Abmessungen und insbesondere größere Gewichte haben müßten.

Aufgabe der Erfindung ist es, eine Univesal-Fräs- und Bohrmaschine mit einer Arbeitsraumabdeckung zu schaffen, die auch ohne störende Vorsprünge und Kanten einen verbesserten und vereinfachten Zugang zum Arbeitsraum ermöglicht.

Diese Aufgabe wird erfindungsgemäß durch die im Patentanspruch 1 angegebenen Merkmale gelöst.

Die Rundtüre ist in Form eines Zylindermantelsegments mit einer runden Außenwand und einer oberen Deckfläche ausgebildet. Dadurch ist eine sehr stabile und steife Türkonstruktion erreichbar, wodurch auch die Abdichtung und Führung erleichtert wird.

Eine konstruktiv einfache und kostengünstige Führung der Rundtüre kann dadurch erreicht werden, daß die Rundtüre um eine oberes Drehgelenk verdrehbar und auf einer unteren Rundführung verschiebbar geführt ist. Dabei kann auf eine aufwendige Schiebeführung an der Oberseite der Türe verzichtet werden.

In einer auch für die Späneabfuhr günstigen Ausführung ist die untere Rundführung auf einer unter dem Bearbeitungstisch angeordneten halbkreisförmigen Bodenwanne angeordnet, die entweder einstückig mit dem Maschinenständer ausgeführt oder an diesem montiert ist. Die halbkreisfömige Bodenwanne enthält keine störenden Ecken oder Vorsprünge, an denen sich die Späne sammeln können. Die Bodenwanne weist zweckmäßigerweise eine in Richtung einer Vertiefung schräg abfallende Bodenfläche auf, an der die Bearbeitungsrückstände zur Vertiefung hin geführt werden. In der Vertiefung kann z.B. eine Förderschnecke zum Abtransport der Späne über einen Späneabfuhrkanal angeordnet sein.

Zum Schutz der Rundführung vor Verschmutzung durch Bearbeitungsspäne während der Bearbeitung weist die Rundtüre eine über die Rundführung schräg nach innen verlaufende untere Abdeckfläche auf. Dadurch kann die gesamte Rundführung bei geschlossener Türe abgedeckt werden. Die Bearbeitungsspäne oder dgl. können an dieser schrägen Abschlußfläche entlanggleiten und in die Bodenwanne fallen, von wo sie z.B. über eine Förderschnecke abtransportiert werden können.

In der Rundtüre sind zweckmäßigerweise Sichtfenster zur visuellen Überwachung der Bearbeitung angeordnet. Da diese Sichtfenster bei der Bearbeitung mit Kühlschmiermitteln vielfach intensiv von innen besprüht werden und dadurch der Sichtkontakt zum Werkzeug behindert wird, ist in einer weiteren vorteilhaften Ausführung mindestens ein Sichtelement mit einer rotierenden Scheibe zum Abschleudern des Kühlschmiermittels bzw. der Späne angeordnet. Dadurch kann zumindest über einen kleinen Bereich der Rundtüre ein Sichtkontakt zur Bearbeitungsstelle auch bei einem intensiven Einsatz von Kühlschmiermitteln gewährleistet werden. Ein derartiges Sichtelement kann in der Rundtüre z.B. innerhalb eines Sichtfensters oder außerhalb des Sichtfensters in der Seitenwand angeordnet sein. Das Sichtelement kann aber auch in einem anderem Bereich der Arbeitsraumabdeckung vorgesehen sein.

Weitere Besonderheiten und Vorzüge der Erfindung ergeben sich aus der folgenden Beschreibung eines vorteilhaften Ausführungsbeispiels anhand der Zeichnung. Es zeigt:
- Fig. 1:: eine Werkzeugmaschine mit Arbeitsraumabdeckung und geöffneter Rundtüre in schematischer Perspektivansicht;
- Fig. 2:: die in Fig. 1 dargestellte Werkzeugmaschine mit Arbeitsraumabdeckung und geschlossener Rundtüre;
- Fig. 3:: den unteren Aufbau der in Fig. 1 und 2 gezeigten Werkzeugmaschine ohne Arbeitsraumabdeckung und Schutzabdeckungen für die Führungsbahnen.

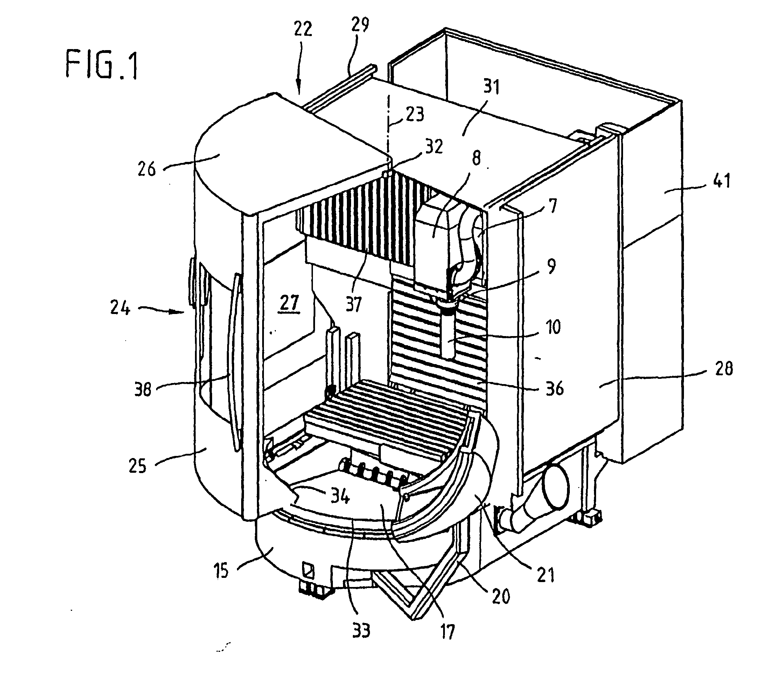

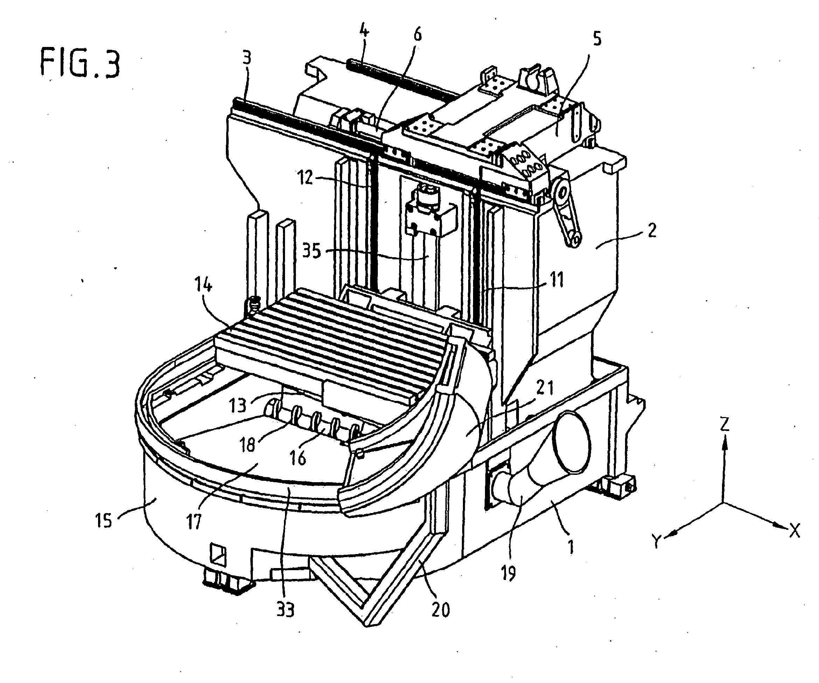

Die in Fig. 1 schematisch gezeigte Universal-Fräs- und Bohrmaschine enthält ein Maschinenbett 1, auf dem ein in Fig. 3 dargestellter Ständer 2 angeordnet ist. Wie aus Fig. 3 hervorgeht, sind auf der Oberseite des Ständers 2 horizontale Führungsschienen 3 und 4 montiert, auf denen ein Schlitten 5 über eine motorisch angetriebene Spindel 6 in einer X-Achse verfahrbar angeordnet ist. Auf dem Schlitten 5 ist ein in Fig. 1 gezeigter Spindelstock 7 mit einem an seiner Vorderseite verdrehbar angeordneten Fräskopf 8 in einer Y-Achse motorisch verfahrbar montiert. In dem Fräskopf 8 ist eine motorisch antreibbare Arbeitsspindel 9 zur Aufnahme von z.B. Fräs- und Bohrwerkzeugen 10 bzw. Werkzeughaltern gelagert.

An der Vorderseite des Ständers 2 sind zwei vertikale Führungsschienen 11 und 12 angeordnet, an denen eine Konsole 13 mit einem Werkstücktisch 14 über eine motorisch antreibbare Spindel 35 in einer Z-Achse verfahrbar geführt ist. Das Maschinenbett 1 weist unterhalb des Bearbeitungstisches 14 und der Konsole 13 ein halbkreisförmiges Vorderteil 15 in Art einer Bodenwanne auf, das eine in Richtung einer Vertiefung 16 schräg abfallende Bodenfläche 17 enthält. Innerhalb der Vertiefung 16 ist eine motorisch antreibbare Förderschnecke 18 für den Abtransport der Bearbeitungsspäne über einen Späneabfuhrkanal 19 angeordnet. An dem halbkreisförmigen Vorderteil 15 ist außerdem ein Schwenkarm 20 für eine Bedienungskonsole 21 seitlich verschwenkbar angelenkt.

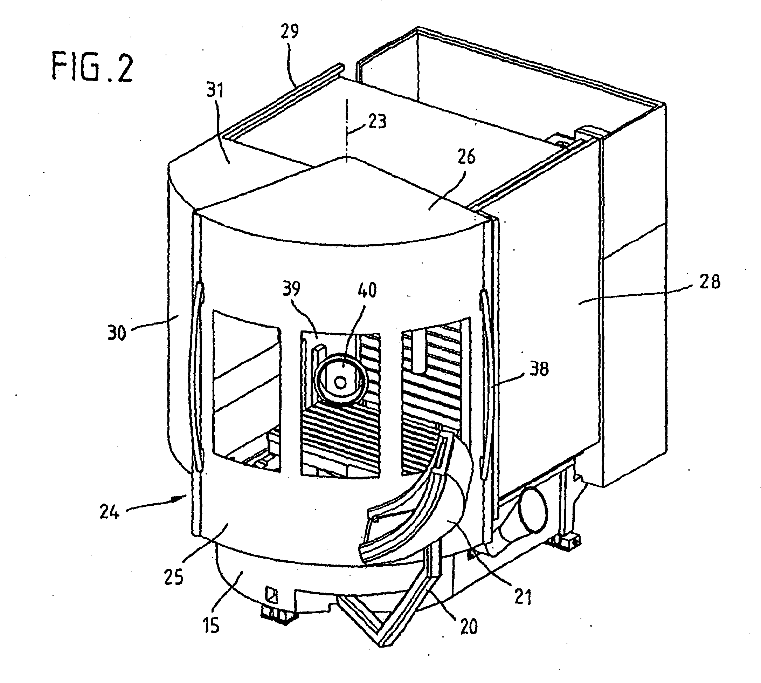

Wie aus den Fig. 1 und 2 hervorgeht, weist die Werkzeugmaschine eine Arbeitsraumabdeckung 22 zum Schutz der Umgebung vor den bei der Bearbeitung anfallenden Spänen oder Kühlschmiermitteln auf. Die Arbeitsraumabdeckung 22 ist als Schutzkabine mit einer um eine Vertikalachse 23 drehbaren Rundtüre 24 ausgebildet. Die bei der gezeigten Ausführung in Form eines Zylindermantelsegments ausgebildete Rundtüre 24 enthält eine gebogene Seitenwand 25 und eine z.B. als Viertelkreis ausgeführte kreissegmentförmige Deckfläche 26, die fest miteinander verbunden sind. In der Ausführung gemäß der Fig. 1 und 2 ist die Rundtüre 24 derart ausgebildet, daß sie in ihrer geschlossenen Stellung den Arbeitsraum 27 der Universal-Fräs- und Bohrmaschine an der rechten Außenseite und der Frontseite abdeckt und in ihrer vollständig geöffneten Stellung einen Zugang von vorne und von der Seite ermöglicht. Der feststehende Teil der Schutzkabine enthält zwei parallele Seitenwände 28, 29 und einen in Fig. 2 erkennbaren vorderen abgerundeten Wandteil 30, die durch eine obere Deckplatte 31 verbunden sind. Durch den abgerundeten Wandteil 30 wird der durch die geschlossene Rundtüre 24 nicht abgedeckte vordere Bereich des Arbeitsraumes der Werkzeugmaschine abgeschlossen. Der feststehende Teil der Schutzkabine kann z.B. an dem Maschinenbett 1 oder dem Ständer 2 befestigt sein.

Wie besonders aus Fig. 1 hervorgeht, ist die Rundtüre 24 an einem z.B. als Drehzapfen ausgebildeten oberen Drehgelenk 32 an der Deckplatte 31 um die Vertikalachse 23 verdrehbar angelenkt. An der Unterseite ist die Rundtüre 24 durch eine auf dem Vorderteil 15 angeordnete Rundführung 33 z.B. in Form einer Führungsschiene verschiebbar geführt. Die Kombination aus oberem Drehgelenk 32 und unterer Rundführung 33 stellt eine kostengünstige und stabile Führung dar. Durch die steife Ausführung der Rundtüre 24 und die stabile Führung kann auch die Abdichtung z.B. an den Stoßkanten der Rundtüre 24 vereinfacht werden. An ihrer Unterseite weist die Rundtüre 24 eine zur Bodenwanne schräg nach innen geneigte Abdeckfläche 34 auf, welche die Rundführung 33 bei geschlossener Türe überdeckt. Dadurch können die bei der Bearbeitung anfallenden Späne an dieser Abdeckfläche 34 entlang zur schräg abfallenden Bodenfläche 17 des Vorderteils 15 gleiten und die Rundführung 33 wird vor Verschmutzung geschützt. Die in Fig. 3 gezeigte Antriebsspindel 35 sowie die Führungsschienen 3, 11 und 12 sind z.B. durch Faltenbälge 36 und 37 o.ä. abgedeckt.

Im Bereich der beiden Eckkanten der Rundtüre 24 ist zum Öffnen und Schließen jeweils ein gebogener Handgriff 38 angebracht. Für den Einblick zum Arbeitsraum 27 während der Bearbeitung weist die Rundtüre 24 bei der gezeigten Ausführung drei separate Sichtfenster 39 auf. Gemäß Fig. 2 ist in dem mittleren Sichtfenster 39 ein Sichtelement 40 mit einer rotierenden Scheibe zum Abschleudern des Kühlschmiermittels und der Späne angeordnet. Das Sichtelement kann auch mit einem im Inneren umlaufenden Wischerelement versehen sein, das in diesem Bereich das an die Scheibe spitzende Kühlschmiermittel bzw. die Späne entfernt. Dadurch kann eine Bedienperson den Bearbeitungsprozeß auch dann visuell überwachen, wenn die Sichtfenster bei der Bearbeitung mit Kühlschmiermittel intensiv von innen besprüht werden und so keinen Sichtkontakt zur Bearbeitungsstelle ermöglichen. Auch am hinteren Teil der Werkzeugmaschine ist eine abnehmbare Abdeckung 41 angeordnet, durch die der hintere Bereich abgeschlossen wird.

Die Erfindung ist nicht auf das im einzelnen beschriebene und in der Zeichnung dargestellte Ausführungsbeispiel beschränkt. Es können auch mehrere z.B. konzentrisch ineinander verschiebbare Rundtüren vorgesehen sein, wenn ein größerer Zugang erforderlich oder dies aufgrund der geometrischen Gegebenheiten zweckmäßig ist.

## Patentansprüche

1. Universal-Fräs- und Bohrmaschine mit
- einem auf einem Maschinenbett (1) angeordneten Ständer (2), auf dessen Oberseite horizontale Führungsschienen (3, 4) montiert sind,
- einem auf den Führungsschienen (3, 4) in einer X-Achse motorisch verfahrbaren Schlitten (5),
- einem auf dem Schlitten (5) in einer Y-Achse motorisch verfahrbaren Spindelstock (7), an dessen Vorderseite ein verdrehbar angeordneter Fräskopf (8) montiert ist, in dem eine motorisch antreibbare Arbeitsspindel (9) zur Aufnahme von Fräs- und Bohrwerkzeugen (10) bzw. Werkzeughaltern lagert,
- einer an der Vorderseite des Ständers (2) in der vertikalen Z-Achse motorisch verfahrbaren Konsole (13) mit einem Werkstücktisch (14) und
- einer als Schutzkabine ausgebildeten Arbeitsraumabdeckung (22), die mindestens eine um eine Vertikalachse (23) auf einer kreisförmigen Bahn verschiebbare Rundtüre (24) für den Zugang zum Arbeitsraum (27) enthält, deren Seitenwand (25) in Form eines Zylindermantelsegments ausgebildet und auf einer unteren zur vertikalen Z-Achse koaxialen Rundführung (33) geführt ist,
**dadurch gekennzeichnet, dass**
- die Schutzkabine (22) einen feststehenden Teil enthält, der zwei parallele Seitenwände (28, 29) und einen vorderen abgerundeten Wandteil (30) aufweist, die durch eine obere Deckplatte (31) verbunden sind,
- die Seitenwand (25) der Rundtüre (24) mit einem kreissegmentförmigen oberen Deckelement (26) fest verbunden ist, das an der oberen Deckplatte (31) um die Vertikalachse (23) verschwenkbar geführt ist und das bei geschlossener Rundtüre (24) den Arbeitsraum (27) zusammen mit der Deckplatte (31) nach oben abdeckt,
- das Maschinenbett (1) unterhalb des Werkstücktisches (14) und der Konsole (13) ein halbkreisförmiges Vorderteil (15) in Art einer Bodenwanne aufweist, auf dem die als Führungsschiene ausgebildete Rundführung (33) vor Verschmutzung geschützt außen angeordnet ist, und
- die Rundtüre (24) an ihrer Unterseite eine zur Bodenwanne (15) schräg nach innen geneigte Abdeckfläche (34) aufweist, welche die Rundführung (33) bei geschlossener Rundtüre (24) zum Schutz vor Verschmutzungen überdeckt und auf der Bearbeitungsspäne in die Bodenwanne (15) gleiten,
- die Bodenwanne (15) eine in Richtung einer Vertiefung (16) schräg abfallende Bodenfläche (17) enthält und in der Vertiefung (16) eine Förderschnecke (18) zum Abtransport der Späne über einen Späneabfuhrkanal (19) angeordnet ist,
- wobei die Rundtüre (24) derart ausgebildet ist, dass sie in ihrer geschlossenen Stellung den Arbeitsraum (27) an einer Außenseite und an der Frontseite abdeckt und in ihrer vollständig geöffneten Stellung eine durchgehende seitliche und obere Öffnung freigibt, die einen Zugang zum Arbeitsraum (27) von oben, von vorne und von der Seite zulässt.

2. Universal-Fräs- und Bohrmaschine nach Anspruch 1,
**dadurch gekennzeichnet, dass**
das Deckelement (26) an einem oberen Drehgelenk (32) an der Deckplatte (31) um die Vertikalachse (23) verschwenkbar angelenkt ist.

3. Universal-Fräs- und Bohrmaschine nach einem der vorstehenden Ansprüche,
**dadurch gekennzeichnet, dass**
die Rundtür (24) mit seitlichen Türgriffen (38) und mindestens einem Sichtfenster (39) versehen ist.

4. Universal-Fräs- und Bohrmaschine nach einem der vorstehenden Ansprüche,
**dadurch gekennzeichnet, dass**
in der Rundtür (24) mindestens ein Sichtelement (40) mit einer rotierenden Scheibe zum Abschleudern von Kühlmittel und Spänen angeordnet ist.

## Claims

1. A universal milling and drilling machine comprising
- a column (2) arranged on a machine bed (1), having horizontal guiding rails (3, 4) mounted on the upper side thereof,
- a carriage (5) which can be moved on said guiding rails (3, 4) by a motor in an x-axis,
- a spindle head (7) which can be moved on said carriage (5) by a motor in a y-axis, on whose front side a rotatably arranged milling head (8) is mounted in which a working spindle (9) that can be driven by a motor is supported so as to receive milling and drilling tools (10) and tool holders, respectively,
- a console (13) comprising a workpiece table (14), which console can be moved by a motor on the front side of the column (2) in the vertical z-axis, and
- a working area protection (22) formed as a protection cabin which contains at least one circular door (24) that can be moved for access to the working area (27) about a vertical axis (23) on a circular track, and whose side wall (25) is formed in the shape of a cylindrical surface segment and guided on a lower circular guiding way (33) which is coaxial with the vertical z-axis,
**characterized in that**
- the protection cabin (22) includes a stationary part having two parallel side walls (28, 29) and a front rounded wall part (30) connected to one another by an upper covering plate (31),
- the side wall (25) of the circular door (24) is firmly linked to an upper surface component (26) in the shape of a circular segment that is guided on the upper covering plate (31) in such a way as to enable it to swivel about the vertical axis (23) and which, when the circular door (24) is closed, covers the working area (27) in an upward direction together with the covering plate (31),
- the machine bed (1) below the workpiece table (14) and the console (13) has a semicircular front part (15) of the type of a bottom trough on which the circular guiding way (33) formed as a guiding rail is disposed on the outside in a manner protected against soiling, and
- the circular door (24) has on its lower side a tilted covering surface (34) inwardly inclined to the bottom trough (15), which covers the circular guiding way (33) for protection against soiling when the circular door (24) is closed and on which machining swarf glide into the bottom trough (15),
- the bottom trough (15) contains a floor area (17) which is inclined in the direction of a recess (16) and a feed screw (18) for the removal of the swarf through a swarf removal channel (19) is arranged in the recess (16),
- the circular door (24) being formed so as to cover the working area (27) on one outer side and on the front side in its closed posture and to release in its completely opened posture a continuous lateral and upper opening allowing access to the working area (27) from above, from the front and from the side.

2. The universal milling and drilling machine according to claim 1,
**characterized in that**
the upper surface component (26) is attached on an upper turning joint (32) on the covering plate (31) in such a way as to enable it to swivel about the vertical axis (23).

3. The universal milling and drilling machine according to any one of the preceding claims,
**characterized in that**
the circular door (24) is provided with side door handles (38) and at least one inspection window (39).

4. The universal milling and drilling machine according to any one of the preceding claims,
**characterized in that**
at least one inspection component (40) including a rotating pane for throwing off lubricants and swarf is disposed in the circular door (24).

## Revendications

1. Fraiseuse - aléseuse universelle comprenant
- un montant (2), disposé sur un bâti (1), sur la partie supérieure duquel des glissières de guidage (3, 4) sont montées,
- un chariot (5) pouvant être déplacé dans le plan horizontal sur les glissières de guidage (3, 4) à l'aide d'un moteur,
- une poupée porte-broche (7) pouvant être déplacée dans le plan vertical sur le chariot (5) à l'aide d'un moteur, en face avant de laquelle est montée une tête de fraisage (8) agencée de manière à pouvoir pivoter, dans laquelle est disposée une broche de travail (9) actionnée par un moteur pour l'emmanchement d'outils de fraisage et d'alésage (10) et, ou encore, de fourreaux porte-outils,
- une console (13) pouvant être déplacée dans le plan vertical par l'intermédiaire d'un moteur, disposée sur la face antérieure du montant (2), qui est munie d'un plateau porte-pièces (14) et
- une enceinte de recouvrement de l'espace de travail (22) se présentant sous la forme d'une cabine de protection, qui comporte au moins une porte circulaire (24) permettant d'accéder à l'espace de travail (27), pouvant être déplacée suivant une trajectoire circulaire, dont la paroi latérale (25) a la configuration d'un segment d'enveloppe cylindrique et qui est montée sur un guide circulaire (33) suivant une disposition coaxiale par rapport à l'axe des Z,
**caractérisée en ce que**
- la cabine de protection (22) comporte une partie fixe qui se compose de deux portions de paroi latérales (28, 29) et d'une portion de paroi antérieure arrondie, qui sont raccordées ensemble par une plaque de recouvrement supérieure (31).
- la paroi latérale (25) de la porte circulaire (24) est réalisée solidaire d'un élément de recouvrement supérieur en forme de segment de cercle (26) qui est monté sur la plaque de recouvrement supérieure (31) avec la possibilité de pivoter autour de l'axe vertical (23) et qui, lorsque la porte circulaire (24) est fermée, recouvre vers le haut l'espace de travail (27) conjointement à la plaque de recouvrement supérieure (31),
- la bâti (1) comporte, disposé sous le plateau porte-pièces (14) et la console (12), un élément antérieur semi-circulaire (15) se présentant comme un fond en forme d'auge, sur lequel le guide semi-circulaire (33) ayant la forme d'une glissière de guidage est monté suivant une disposition extérieure pour empêcher les pénétrations de salissures, et
- la porte circulaire (24) comporte, au niveau de sa partie inférieure, une face de recouvrement (34) orientée obliquement vers l'intérieur par rapport à l'élément semi-circulaire (15), qui, lorsque la porte circulaire (24) est fermée, recouvre le guide semi-circulaire (33) pour empêcher les pénétrations de salissures et sur laquelle les copeaux d'usinage glissent pour tomber dans le fond en forme d'auge (15),
- le fond en forme d'auge (15) comporte un plan de fond (17) qui descend en pente oblique dans la direction d'une dépression (16) et **en ce qu'**un convoyeur à vis sans fin (18) est disposé dans la dépression (16) pour assurer l'évacuation des copeaux par l'intermédiaire d'une goulotte d'évacuation des copeaux (19),
- la configuration de la porte circulaire (24) étant en l'occurrence étudiée de telle manière que, lorsque celle-ci est fermée, elle recouvre l'espace de travail (27) sur une face extérieure et sur sa partie antérieure et que, lorsqu'elle est ouverte à fond de course, elle dégage une ouverture latérale et supérieure traversante, qui permet d'accéder à l'espace de travail (27) depuis le haut, depuis l'avant et depuis le côté.

2. Fraiseuse - aléseuse universelle selon la revendication 1,
**caractérisée en ce que**
l'élément de recouvrement (26) est monté sur la plaque de recouvrement supérieure (31) avec la possibilité de pivoter autour de l'axe vertical (23) par l'intermédiaire d'une articulation à charnière (32).

3. Fraiseuse - aléseuse universelle selon l'une des revendications précédentes,
**caractérisée en ce que**
la porte circulaire (24) est munie de poignés de manoeuvre latérales (38) et d'au moins un hublot (39)

4. Fraiseuse - aléseuse universelle selon l'une des revendications précédentes,
**caractérisée en ce que**
dans la porte circulaire (24) il est prévu au moins un regard (40) muni d'un disque tournant pour séparer par centrifugation le liquide de coupe des copeaux.
